# EUROPÄISCHE PATENTSCHRIFT

(11) **EP 3 266 582 B1**
(45) Veröffentlichungstag und Bekanntmachung des Hinweises auf die Patenterteilung: **09.12.2020**
(21) Anmeldenummer: 17168319.6
(22) Anmeldetag: 27.04.2017
(51) Int. Cl.: B29C 43/24, B29C 43/30, B29C 43/28, B29C 43/26, B29D 30/38, G01B 11/06, B29C 43/58

(54) **VERFAHREN ZUR BESTIMMUNG DER MATERIALSCHICHTDICKE BEI DER HERSTELLUNG VON REIFENBAUTEILEN**
METHOD FOR DETERMINING MATERIAL LAYER THICKNESS IN THE PRODUCTION OF TYRE COMPONENTS
PROCÉDÉ DE DÉTERMINATION DE L'ÉPAISSEUR DE COUCHE DE MATÉRIAU LORS DE LA FABRICATION DE COMPOSANTS DE PNEUMATIQUES

(30) Priorität: 04.07.2016 DE 102016212074
(43) Veröffentlichungstag der Anmeldung: 10.01.2018
(73) Patentinhaber: Continental Reifen Deutschland GmbH, 30165 Hannover (DE)
(72) Erfinder: Holodenko, Mihail, 30175 Hannover (DE)
(74) Vertreter: Widjaja, Wira

(56) Entgegenhaltungen:
- EP-A1- 2 985 585
- US-A- 3 930 922
- US-A1- 2015 035 547
- US-A1- 2016 001 502
- JAGGERS H T ED - INSTITUTE OF ELECTRICAL AND ELECTRONICS ENGINEERS: "A NEW MEASUREMENT AND CONTROL SYSTEM FOR RUBBER CALENDERING", CONFERENCE RECORD OF THE INDUSTRY APPLICATIONS SOCIETY ANNUAL MEETING (IAS). PITTSBURGH, OCT. 2 - 7, 1988; [CONFERENCE RECORD OF THE INDUSTRY APPLICATIONS SOCIETY ANNUAL MEETING (IAS)], NEW YORK, IEEE, US, Bd. 2, 2. Oktober 1988 (1988-10-02), Seiten 1360-1366, XP000106257,

## Beschreibung

Die Erfindung betrifft Verfahren zur Bestimmung der Materialschichtdicke bei der Herstellung von Reifenbauteilen.

Es ist bekannt, z.B. Laufstreifen für Fahrzeugreifen mit Extrudern herzustellen.
Bei Reifenbauteilen aus mehreren Materialschichten ist es wichtig, dass die Materialschicht durchgehend eine konstante Dicke aufweist. Bei der Herstellung kann beispielsweise der Fall eintreten, dass das Bauteil im Querschnitt die vorgegebenen Bauteilabmessungen aufweist, wobei gleichzeitig die Materialschichtgrenze nicht im vorgegebenen Toleranzbereich liegt. Entsprechende Abweichungen in der Materialgrenze des Reifenbauteiles können dazu führen, dass bestimmte Eigenschaften des Fahrzeugreifens wie beispielsweise ein geringer Rollwiderstand nicht erreicht werden. Um die Materialgrenze am Reifenbauteil zu überprüfen, werden Proben beim Extrusionsprozess entnommen. Anschließend wird die Probe in einer Querschnittansicht mikroskopisch untersucht. Diese Untersuchungsmethode wird im Allgemeinen manuell durchgeführt und ist u.a. zeitaufwändig.

US 3,930,922 zeigt ein Verfahren, bei dem die Herstellung eines Reifenbauteils, das mit einem Kalander hergestellt wird, überwacht wird. Dazu ist ein Sensor vor bzw. in dem Kalander vorgesehen, der die Schichtdicke einer Materialschicht vor dem Herstellen des Reifenbauteils, d.h. dem Zusammenfügen der Materialschichten, misst und ein Sensor nach dem Kalander, der eine Gesamtdicke des hergestellten Reifenbauteils als endlose Materiallage misst. Durch einen Vergleich der beiden gemessenen Schichtdicken vor und nach der Herstellung des Reifenbauteils kann ermittelt werden, ob Grenzwerte eingehalten sind und der Herstellungsprozess entsprechend anzupassen ist.

Ein vergleichbares Verfahren zeigt auch US 2016/0001502 A1 für ein Laminat für ein Transportband aus zwei Materialschichten. In EP 2 985585 A1 ist ein Verfahren gezeigt, bei dem ein Terahertzsensor an einem fertiggestellten Reifen verwendet wird, um insbesondere die Schichtdicke einzelner aufgewickelter Reifenbauteile zu ermitteln.

Der Erfindung liegt die Aufgabe zugrunde, ein Verfahren zu schaffen, mit dem eine verbesserte Bestimmung der Materialschichtdicke bei der Herstellung von Reifenbauteilen erfolgen kann.

Gelöst wird die Aufgabe gemäß Anspruchs 1 mit einem Verfahren mit folgenden Schritten:
a) Bereitstellen eines Reifenbauteiles mit einer Vorrichtung zum Herstellen von Gummibauteilen,
   wobei das Reifenbauteil in Form einer Materiallage und als Endlosmaterial hergestellt wird,
b) Kontinuierliches Fördern des Reifenbauteiles entlang einer Förderstrecke,
   wobei oberhalb und /oder unterhalb des Reifenbauteiles ein Terahertzsensor angeordnet ist,
c) Durchführen einer kontinuierlichen Materialdickenmessung am Reifenbauteil,
   wobei mit dem Terahertzsensor eine Terahertzstrahlung generiert wird,
   wobei an den Materialgrenzen im Reifenbauteil Reflektionen in Form von Echos entstehen,
   wobei mit den vom Terahertzsensor ermittelten Laufzeiten der Echos mindestens eine Materialschichtdicke im Reifenbauteil ermittelt wird,
f) Kontinuierliches Auswerten der empfangenen Messsignale mit einer Software und Überwachen der Materialschichtdicke des Reifenbauteiles,
   wobei die ermittelte Materialschichtdicke jeweils mit einer vorgegebenen Materialschichtdicke verglichen wird,
g) kontinuierliche Weiterführung des Herstellungsprozesses für das Reifenbauteil, sofern keine Abweichung von einer vorgegebenen Materialschichtdicke detektiert wird.

Ein Vorteil der Erfindung ist insbesondere darin zu sehen, dass durch das Verfahren eine kontinuierliche Messung der Materialschichtdicke der unterschiedlichen Materialschichten durchgeführt werden kann. Die Materialschichtdickenmessung kann kontinuierlich beim laufenden Herstellungsprozess durchgeführt werden, so dass der Prozess bei der Messung nicht unterbrochen werden muss. Außerdem wird mit dem Verfahren die Materialschichtdicke der ersten und/oder der zweiten Materialschicht kontinuierlich überwacht, so dass für das Reifenbauteil eine hohe und gleichbleibende Fertigungsqualität sicher gestellt werden kann. Mit dem neuen Verfahren kann unmittelbar bei der Herstellung festgestellt werden, ob die Fertigungsqualität einen vorgegebenen Qualitätsstandard nicht mehr erfüllt. Auf diese Weise lässt sich der Materialausschuss erheblich reduzieren.

Der Einsatz eines Terahertzsensors bietet insbesondere den Vorteil, dass mit dieser Technologie die einzelnen Materialschichtdicken mit einer hohen Präzision ermittelt werden können. Außerdem lassen sich die Messdaten von einem Terahertzsensor einfach und mit einer hohen Geschwindigkeit auswerten.

Erfindungsgemäß ist vorgesehen, dass der Terahertzsensor an einem Rahmen angeordnet ist und bei Schritt c) der Terahertzsensor quer zur Förderrichtung oberhalb des Reifenbauteiles hin- und her verfahren wird.
Auf diese Weise lassen sich auch relativ breite Reifenbauteile, die beispielsweise mit einem Kalander hergestellt werden, in Bezug auf ihre jeweilige Materialschichtdicke effektiv überwachen.

Gemäß der Erfindung ist weiterhin vorgesehen, dass der Terahertzsensor am Rahmen mit einer Geschwindigkeit zwischen 50 und
400 mm/s bewegt wird.
Dadurch lässt sich eine hohe Prozessgeschwindigkeit bei der Überwachung der einzelnen Materialschichtdicken am Reifenbauteil erzielen. Die Fördergeschwindigkeit bei der Herstellung des Reifenbauteiles wird außerdem nicht beeinträchtigt.

In einer weiteren vorteilhaften Ausführung der Erfindung ist vorgesehen, dass der Terahertzsensor einen Abstand von 100 bis 150 mm bis zur Oberseite des Reifenbauteiles aufweist.
Dadurch wird die Vorrichtung weniger anfällig für Verschmutzungen, Temperaturunterschiede und Oberflächenunebenheiten, wobei gleichzeitig die Materialschichtdicken mit einer hohen Messgenauigkeit erfasst werden können.

In einer weiteren vorteilhaften Ausführung der Erfindung ist vorgesehen, dass die Vorrichtung bei Schritt a) einen Kalander umfasst und das hergestellte Reifenbauteil eine kalandrierte Materiallage mit einzelnen Festigkeitsträgern sowie einer oberen und unteren Gummilage ist.
Bei diesem Herstellungsverfahren ist der Terahertzsensor besonders vorteilhaft einsetzbar, weil alle drei Materialschichtdicken mit einer hohen Messgenauigkeit bestimmt und überwacht werden können.
Außerdem entfällt die Notwendigkeit Einzelschichtdicken vor der Laminierung mit Gummimaterial zu vermessen.

In einer weiteren vorteilhaften Ausführung der Erfindung ist vorgesehen, dass an der kalandrierten Materiallage die Materialdickenmessung mit jeweils einem Terahertzsensor oberhalb und unterhalb der Materiallage durchgeführt wird.
Insbesondere bei Gürtellagen für Fahrzeugreifen bestehen die Festigkeitsträgerlagen aus einer Vielzahl von Metalldrähten. Bei dieser Applikation können die Teraherzstrahlen im Allgemeinen die Metalldrähte nicht durchdringen. In diesem Fall wird zur Messung der Materialschichtdicke der unteren Gummilage, ebenfalls auf der Unterseite des Reifenbauteiles ein zweiter Terahertzsensor angeordnet. Dieser zweite Terahertzsensor würde ebenfalls an einem Rahmen verfahrbar angeordnet werden.

In einer weiteren vorteilhaften Ausführung der Erfindung ist vorgesehen, dass das Reifenbauteil mit einer Fördergeschwindigkeit zwischen 10 und 70 Meter pro Minute, vorzugsweise 40 und 60 Meter pro Minute, am Terahertzsensor vorbei geführt wird. Trotz der hohen Fördergeschwindigkeit des Reifenbauteiles lässt sich mit dem Terahertzsensor die Materialschichtdicke mit einer hohen Genauigkeit überwachen.

In einer weiteren vorteilhaften Ausführung der Erfindung ist vorgesehen, dass die Materiaschichtdicke der einzelnen Materialschichten mit einer Genauigkeit von mindestens 0,01 - 0,02 mm bestimmt werden kann.

Auf diese Weise lässt sich eine hohe Fertigungsqualität für die kalandrierten oder extrudierten Reifenbauteile gewährleisten.

Anhand eines Ausführungsbeispiels soll die Erfindung näher erläutert werden. Es zeigt:
- Fig. 1:: ein Ausführungsbeispiel für das Verfahren,
- Fig. 2:: eine kalandrierte Materiallage

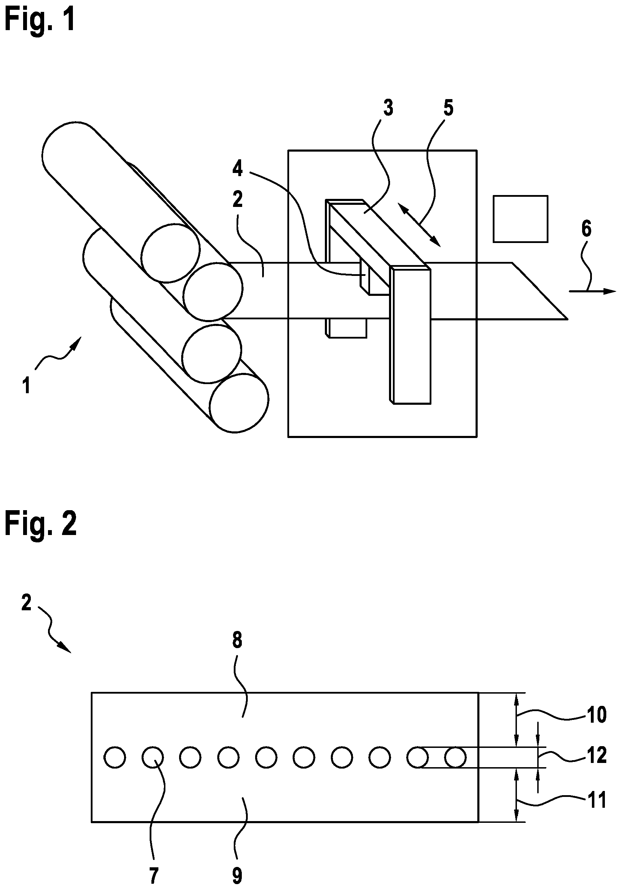

Fig. 1 zeigt ein Ausführungsbeispiel des Verfahrens.
Es ist schematisch ein Kalander 1 dargestellt, mit dem z. B. Gürtellagen oder Karkasslagen mit Festigkeitsträgern für Fahrzeugreifen hergestellt werden. Die Reifenbauteile werden als sogenannte Vormaterialien hergestellt, die anschließend z. B. zunächst auf Rollen gelagert werden. Der Kalander 1 weist ein oberes und ein unteres Rollenpaar auf. Mit dem oberen Rollenpaar wird die obere Gummimischung auf die nicht dargestellte Festigkeitsträgerlage aufgebracht. Mit dem unteren Kalanderrollenpaar wird die untere Gummimischung in Form einer dünnen Materialschicht auf die Festigkeitsträgerlage appliziert. Aus dem Kalander 1 tritt das dargestellte Reifenbauteil 2 in Form einer kalandrierten Materiallage aus. Das Reifenbauteil 2 wird in Förderrichtung 6 entlang der dargestellten Förderstrecke gefördert. Das Reifenbauteil 2 wird durch den Rahmen 3 gefördert an dem ein Terahertzsensor 4 angeordnet ist. Der Terahertzsensor 4 ist beweglich am Rahmen 3 angeordnet und wird bei der Messung der Materialschichtdicke in Bewegungsrichtung 5 quer zur Förderrichtung der Materiallage bzw. des Reifenbauteiles 2 verfahren. Der Terahertzsensor 4 wird mit einer Bewegungsgeschwindigkeit zwischen 50 und 400 mm pro Sekunde hin- und her verfahren. Mit dem Terahertzsensor 4 wird eine kontinuierliche Messung der Materialschichtdicke der einzelnen Materiallagen durchgeführt. Bei einer Abweichung einer Materialschichtdicke von einem vorgegebenen Wert, erfolgt eine Rückkopplung an den Kalander 1. Der Kalander 1 erhält dann beispielsweise ein entsprechendes Regelungssignal. Der Kalander würde dann automatisch z. B. den oberen oder den unteren Kalanderspalt verkleinern, um die jeweilige Materialschichtdicke auf den vorgegebenen Wert zurückzuführen.

Die Figur 2 zeigt einen Abschnitt des Reifenbauteils 2 aus der Figur 1 in einer Querschnittansicht. In der Mitte befinden sich einzelne Festigkeitsträger 7 die eine Festigkeitsträgerlage bilden. Auf der Oberseite der Festigkeitsträger ist die obere Gummilage und auf der Unterseite die untere Gummilage angeordnet. Mit dem Terahertzsensor lassen sich alle drei Materialschichtdicken der oberen Gummilage 10, der unteren Gummilage 11 und der Festigkeitsträgerlage 12 mit einer hohen Genauigkeit bestimmen und überwachen. Bei der Messung mit dem Terahertzsensor werden Teraherzstrahlen an den schematisch dargestellten Materialgrenzen reflektiert. Über eine Messung der Laufzeiten lässt sich die jeweilige Materialschichtdicke mit einer hohen Genauigkeit bestimmen.

### Bezugszeichenliste

### (ist Teil der Beschreibung)

- 1: Kalander, z.B. zur Herstellung von Gürtellagen oder Karkasslagen mit Festigkeitsträgern
- 2: Aus dem Kalander austretendes Reifenbauteil in Form einer kalandrierten Materiallage
- 3: Rahmen
- 4: Terahertzsensor
- 5: Bewegungsrichtung des Terahertzsensor quer zur Förderrichtung der Materiallage
- 6: Förderrichtung
- 7: Festigkeitsträger
- 8: Obere Gummilage
- 9: Untere Gummilage
- 10: Materialschichtdicke der oberen Gummilage
- 11: Materialschichtdicke der unteren Gummilage
- 12: Materialschichtdicke der Festigkeitsträgerlage

## Patentansprüche

1. Verfahren zur Bestimmung der Materialschichtdicke von Materiallagen bei der Herstellung von Reifenbauteilen (2) mit folgenden Schritten :
a) Bereitstellen eines Reifenbauteiles mit einer Vorrichtung zum Herstellen von Reifenbauteilen,
wobei das Reifenbauteil (2) in Form einer Materiallage und als Endlosmaterial hergestellt wird,
b) Kontinuierliches Fördern des Reifenbauteiles (2) entlang einer Förderstrecke, wobei oberhalb und /oder unterhalb des Reifenbauteiles (2) ein Terahertzsensor (4) angeordnet ist, wobei der Terahertzsensor (4) an einem Rahmen (3) angeordnet ist,
c) Durchführen einer kontinuierlichen Materialschichtdickenmessung am Reifenbauteil (2), wobei der Terahertzsensor (4) quer zur Förderrichtung (6) oberhalb des Reifenbauteiles (2) hin- und her verfahren wird und der Terahertzsensor (4) dabei am Rahmen (3) mit einer Geschwindigkeit zwischen 50 und 400 mm/s bewegt wird, wobei mit dem Terahertzsensor (4) eine Terahertzstrahlung generiert wird,
wobei an den Materialgrenzen im Reifenbauteil (2) Reflektionen in Form von Echos entstehen,
wobei mit den vom Terahertzsensor (4) ermittelten Laufzeiten der Echos mindestens eine Materialschichtdicke (10, 11, 12) der jeweiligen Materialschicht im Reifenbauteil (2) ermittelt wird,
f) Kontinuierliches Auswerten der empfangenen Messsignale mit einer Software und Überwachen der Materialschichtdicke (10, 11, 12) der jeweiligen Materialschicht des Reifenbauteiles (2),
wobei die ermittelte Materialschichtdicke (10, 11, 12) der jeweiligen Materialschicht jeweils mit einer vorgegebenen Materialschichtdicke (10, 11, 12) der jeweiligen Materialschicht verglichen wird,
g) kontinuierliche Weiterführung des Herstellungsprozesses für das Reifenbauteil (2), sofern keine Abweichung von einer vorgegebenen Materialschichtdicke (10, 11, 12) der jeweiligen Materialschicht detektiert wird.

2. Verfahren nach Anspruch 1, **dadurch gekennzeichnet, dass**
der Terahertzsensor (2) einen Abstand von 100 bis 150 mm bis zur Oberseite des Reifenbauteiles (2) aufweist.

3. Verfahren nach einem der vorhergehenden Ansprüche,
**dadurch gekennzeichnet, dass**
die Vorrichtung bei Schritt a) einen Kalander (1) umfasst und das hergestellte Reifenbauteil (2) eine kalandrierte Materiallage mit einzelnen Festigkeitsträgern (7) sowie einer oberen und unteren Gummilage (8, 9) ist.

4. Verfahren nach Anspruch 3,
**dadurch gekennzeichnet, dass**
an der kalandrierten Materiallage die Materialdickenmessung mit jeweils einem Terahertzsensor oberhalb und unterhalb der Materiallage durchgeführt wird.

5. Verfahren nach einem der vorhergehenden Ansprüche,
**dadurch gekennzeichnet, dass**
das Reifenbauteil (2) mit einer Fördergeschwindigkeit zwischen 10 und 70 Meter pro Minute am Terahertzsensor (4) vorbei geführt wird.

6. Verfahren nach einem der vorhergehenden Ansprüche,
**dadurch gekennzeichnet, dass**
die Materiaschichtdicke (10, 11, 12) der einzelnen Materialschichten mit einer Genauigkeit von mindestens 0,01 bis 0,02 mm bestimmt werden kann.

## Claims

1. Method for determining the material layer thickness of material plies in the production of tyre components (2) comprising the following steps:
a) providing a tyre component by a device for producing tyre components,
the tyre component (2) being produced in the form of a material ply and as a continuous material,
b) continuously conveying the tyre component (2) along a conveying section, a terahertz sensor (4) being arranged above and/or below the tyre component (2), the terahertz sensor (4) being arranged on a frame (3),
c) carrying out a continuous material layer thickness measurement on the tyre component (2), the terahertz sensor (4) being moved back and forth transversely in relation to the conveying direction (6) above the tyre component (2) and the terahertz sensor (4) thereby being moved on the frame (3) at a speed of between 50 and 400 mm/s,
a terahertz radiation being generated by the terahertz sensor (4),
reflections in the form of echoes being produced at the material boundaries in the tyre component (2), at least one material layer thickness (10, 11, 12) of the respective material layer in the tyre component (2) being determined by the transit times of the echoes determined by the terahertz sensor (4),
f) continuously evaluating the received measurement signals by software and monitoring the material layer thickness (10, 11, 12) of the respective material layer of the tyre component (2),
the determined material layer thickness (10, 11, 12) of the respective material layer being compared in each case with a prescribed material layer thickness (10, 11, 12) of the respective material layer,
g) continuously carrying on with the production process for the tyre component (2) as long as no deviation from a prescribed material layer thickness (10, 11, 12) of the respective material layer is detected.

2. Method according to Claim 1,
**characterized in that**
the terahertz sensor (2) is at a distance from the upper side of the tyre component (2) of 100 to 150 mm.

3. Method according to one of the preceding claims,
**characterized in that**
the device at step a) comprises a calender (1) and the tyre component (2) produced is a calendered material ply with individual reinforcing elements (7) and also an upper and a lower rubber ply (8, 9).

4. Method according to Claim 3,
**characterized in that**
the material thickness measurement is carried out on the calendered material ply with a terahertz sensor respectively above and below the material ply.

5. Method according to one of the preceding claims,
**characterized in that**
the tyre component (2) is taken past the terahertz sensor (4) at a conveying speed of between 10 and 70 metres per minute.

6. Method according to one of the preceding claims,
**characterized in that**
the material layer thickness (10, 11, 12) of the individual material layers can be determined with an accuracy of at least 0.01 to 0.02 mm.

## Revendications

1. Procédé de détermination de l'épaisseur de couches de matériau lors de la fabrication de composants de pneumatique (2), le procédé comprenant les étapes suivantes :
a) fournir un composant de pneumatique au moyen d'un dispositif de fabrication de composants de pneumatique, le composant de pneumatique (2) étant fabriqué sous la forme d'une couche de matériau et en tant que matériau sans fin,
b) acheminer en continu le composant de pneumatique (2) le long d'un trajet d'acheminement, un capteur térahertz (4) étant disposé au-dessus et/ou au-dessous du composant de pneumatique (2), le capteur térahertz (4) étant disposé sur un cadre (3),
c) effectuer une mesure continue de l'épaisseur de couche de matériau sur le composant de pneumatique (2), le capteur térahertz (4) étant déplacé suivant un mouvement alternatif transversalement à la direction d'acheminement (6) au-dessus du composant de pneumatique (2) et le capteur térahertz (4) étant déplacé sur le cadre (3) à une vitesse comprise entre 50 et 400 mm/s,
un rayonnement térahertz étant généré avec le capteur térahertz (4),
des réflexions sous forme d'échos se produisant aux limites de matériau dans le composant de pneumatique (2),
au moins une épaisseur (10, 11, 12) de la couche de matériau respective du composant de pneumatique (2) étant déterminée par les temps de propagation des échos déterminés par le capteur térahertz (4),
f) évaluer en continu à l'aide d'un logiciel les signaux de mesure reçus et surveiller l'épaisseur (10, 11, 12) de la couche de matériau respective du composant de pneumatique (2),
l'épaisseur déterminée (10, 11, 12) de la couche de matériau respective étant comparée à une épaisseur prédéterminée (10, 11, 12) de la couche de matériau respective,
g) poursuivre en continu le processus de fabrication du composant de pneumatique (2), à condition qu'aucun écart par rapport à une épaisseur prédéterminée (10, 11, 12) de la couche de matériau respective ne soit détecté.

2. Procédé selon la revendication 1,
**caractérisé en ce que**
le capteur térahertz (2) est situé à une distance de 100 à 150 mm par rapport au côté supérieur du composant de pneumatique (2).

3. Procédé selon l'une des revendications précédentes,
**caractérisé en ce que**
le dispositif de l'étape a) comprend une calandre (1) et le composant de pneumatique (2) fabriqué est une couche de matériau calandré pourvue de renforts individuels (7) et de couches de caoutchouc supérieure et inférieure (8, 9).

4. Procédé selon la revendication 3,
**caractérisé en ce que**
la mesure de l'épaisseur du matériau est effectuée sur la couche de matériau calandré à l'aide d'un capteur térahertz placé au-dessus de la couche de matériau et d'un capteur térahertz placé au-dessous de la couche de matériau.

5. Procédé selon l'une des revendications précédentes,
**caractérisé en ce que**
le composant de pneumatique (2) est guidé devant le capteur térahertz (4) à une vitesse d'acheminement comprise entre 10 et 70 mètres par minute.

6. Procédé selon l'une des revendications précédentes,
**caractérisé en ce que**
l'épaisseur (10, 11, 12) des couches de matériau individuelles peut être déterminée avec une précision d'au moins 0,01 à 0,02 mm.
